# DEMANDE DE BREVET EUROPEEN

(11) **EP 1 550 975 A1**
(43) Date de publication de la demande: **06.07.2005**
(21) Numéro de dépôt: 04293165.9
(22) Date de dépôt: 29.12.2004
(51) Int. Cl.: G06F 17/60

(54) **Dispositif, procédé et programme d'ordinateur pour déterminer un agencement optimal d'un espace de travail, dispositif et procédé pour agencer automatiquement un espace de travail et support de données**

(30) Priorité: 29.12.2003 FR 0315527
(71) Demandeur: FRANCE TELECOM, 75015 Paris (FR)
(72) Inventeur: Lamouret, Serge, 94270 Le Kremlin Bicetre (FR); Eber, Eric, 75013 Paris (FR)
(74) Mandataire: Remy, Vincent Noel Paul

(57) **Abrégé**

L'invention à pour objet un dispositif (14) pour déterminer un agencement optimal d'un espace de travail (12), comprenant :
- des moyens (16) de mesure de données d'environnement caractéristiques de l'état d'agencement instantané de l'espace de travail (12),
- des moyens (22) de mesure d'une efficacité instantanée lors de la réalisation d'une tâche,
- des moyens (32) d'enregistrement des données d'environnement mesurées en relation avec une efficacité instantanée mesurée, pour une tâche en cours de réalisation,
- des moyens d'analyse (34) aptes à identifier, parmi les données d'environnement enregistrées en relation avec une tâche déterminée, celles qui correspondent à une efficacité instantanée optimale.

## Description

La présente invention concerne un dispositif, un procédé et un programme d'ordinateur pour déterminer un agencement optimal d'un espace de travail, un dispositif et un procédé pour agencer automatiquement un espace de travail et un support de données.

On entend par espace de travail tout espace au sein duquel une personne est susceptible d'avoir une activité et de réaliser des tâches. L'espace de travail peut être réel ou virtuel. L'espace de travail peut donc être aussi bien une salle de travail qu'un habitacle de véhicule ou qu'une interface d'un ordinateur personnel. Ces exemples d'espaces de travail ne présentent aucun caractère limitatif. On dit que l'espace de travail est agencé de façon optimale lorsque les performances et l'efficacité d'un utilisateur de cet espace de travail sont rendues maximales.

On connaît des systèmes informatiques qui permettent à un utilisateur, grâce à une interface, de définir lui-même un environnement optimal.

Il n'existe pas de dispositif dans l'état de la technique qui permette de déterminer un agencement optimal d'un espace de travail en fonction d'une tâche exécutée par l'utilisateur, de façon automatique, sans action de l'utilisateur.

L'invention a donc pour but de proposer un dispositif pour déterminer un agencement optimal d'un espace de travail, qui ne soit pas contraignant pour l'utilisateur.

A cet effet, l'invention à pour objet un dispositif pour déterminer un agencement optimal d'un espace de travail, comprenant :
- des moyens de mesure de données d'environnement caractéristiques de l'état d'agencement instantané de l'espace de travail,
- des moyens de mesure d'une efficacité instantanée lors de la réalisation d'une tâche,
- des moyens d'enregistrement des données d'environnement mesurées en relation avec une efficacité instantanée mesurée, pour une tâche en cours de réalisation,
- des moyens d'analyse aptes à identifier, parmi les données d'environnement enregistrées en relation avec une tâche déterminée, celles qui correspondent à une efficacité instantanée optimale.

L'invention permet donc de proposer à un utilisateur d'un espace de travail un agencement optimal qui est fonction de l'utilisation instantanée qu'il en fait, c'est à dire de la tâche qu'il exécute. Grâce aux moyens d'enregistrement, le dispositif selon l'invention garde en mémoire un historique des différents agencements déjà utilisés par l'utilisateur. Les moyens d'analyse, par comparaison entre l'historique et l'utilisation instantanée, sont alors aptes à déterminer un agencement optimal de l'espace de travail.

Un dispositif selon l'invention peut en outre comporter l'une ou plusieurs des caractéristiques suivantes :
- les moyens de mesure d'efficacité instantanée comprennent des programmes scrutant des actions d'un utilisateur sur des dispositifs d'entrée/sortie d'ordinateur, ou des documents produits par l'utilisateur au fil de la réalisation de la tâche ;
- le dispositif comprend des moyens de reconnaissance de tâche, à partir des données fournies par les moyens de mesure d'efficacité ;
- les moyens de mesure d'efficacité instantanée comprennent des capteurs surveillant des outils utilisés par l'utilisateur lors de la réalisation de la tâche, tels que poste téléphonique, télécopieur ;
- les moyens de mesure d'efficacité comprennent des moyens de saisie permettant à un utilisateur d'indiquer manuellement une estimation d'efficacité ;
- les moyens de mesure d'efficacité comprennent des capteurs biométriques aptes à capturer notamment le rythme cardiaque, la tension, la température corporelle, la direction du regard, le clignement des yeux, les mouvements de bras, d'un utilisateur ;
- les moyens de mesure de données d'environnement comprennent une horloge indiquant la date et l'heure instantanées ;
- les moyens de mesure de données d'environnement comprennent des capteurs physiques tels que thermomètre, manomètre, luxmètre, hygromètre ;
- le dispositif comprend en outre des moyens d'enregistrement d'une liste de tâches à accomplir ;
- les moyens d'analyse sont aptes à déterminer, pour une configuration donnée de l'espace de travail, une tâche à exécuter dont l'efficacité prévisible compte tenu de cette configuration est optimale ;
- le dispositif comprend un dispositif d'alerte apte à avertir lorsque l'efficacité instantanée mesurée devient inférieure à un seuil prédéterminé.
   L'invention a également pour objet un dispositif pour agencer automatiquement un espace de travail, comprenant, outre un dispositif pour déterminer un agencement optimal d'un espace de travail tel que décrit précédemment,
- un module d'agencement de l'espace de travail,
- des moyens d'actionnement du module d'agencement, commandés par les moyens d'analyse, pour configurer l'espace de travail dans des conditions propres à produire des données d'environnement identifiées comme correspondant à une efficacité optimale.

L'invention a également pour objet un procédé pour déterminer un agencement optimal d'un espace de travail, caractérisé par le fait que l'on exécute les étapes suivantes :
- on mesure des données d'environnement caractéristiques de l'état d'agencement instantané de l'espace de travail,
- on mesure une efficacité instantanée lors de la réalisation d'une tâche,
- on enregistre des données d'environnement mesurées en relation avec une efficacité instantanée mesurée, pour une tâche en cours de réalisation,
- on identifie, parmi les données d'environnement enregistrées en relation avec une tâche déterminée, celles qui correspondent à une efficacité instantanée optimale.

L'invention a également pour objet un procédé pour agencer automatiquement un espace de travail, dans lequel on détermine un agencement optimal de l'espace de travail par mise en oeuvre d'un procédé tel que décrit précédemment, et on configure l'espace de travail dans des conditions propres à produire des données d'environnement identifiées comme correspondant à une efficacité optimale.

L'invention a également pour objet un programme d'ordinateur pour l'exécution d'un procédé pour déterminer un agencement optimal d'un espace de travail tel que décrit précédemment, comprenant :
- au moins une fonction logicielle pour la capture de données d'environnement caractéristiques de l'état d'agencement instantané de l'espace de travail,
- au moins une fonction logicielle pour la capture d'une efficacité instantanée lors de la réalisation d'une tâche,
- au moins une fonction logicielle pour l'enregistrement de données d'environnement mesurées en relation avec une efficacité instantanée mesurée, pour une tâche en cours de réalisation,
- au moins une fonction logicielle pour l'identification, parmi les données d'environnement enregistrées en relation avec une tâche déterminée, de celles qui correspondent à une efficacité instantanée optimale.

L'invention a également pour objet un support de données lisible par un ordinateur sur lequel est stocké un programme d'ordinateur tel que décrit précédemment. Ce support de données est par exemple un CD-Rom, une disquette magnétique, une clé USB ou un disque dur, ou bien un support transmissible tel qu'un signal électrique, optique ou radio.

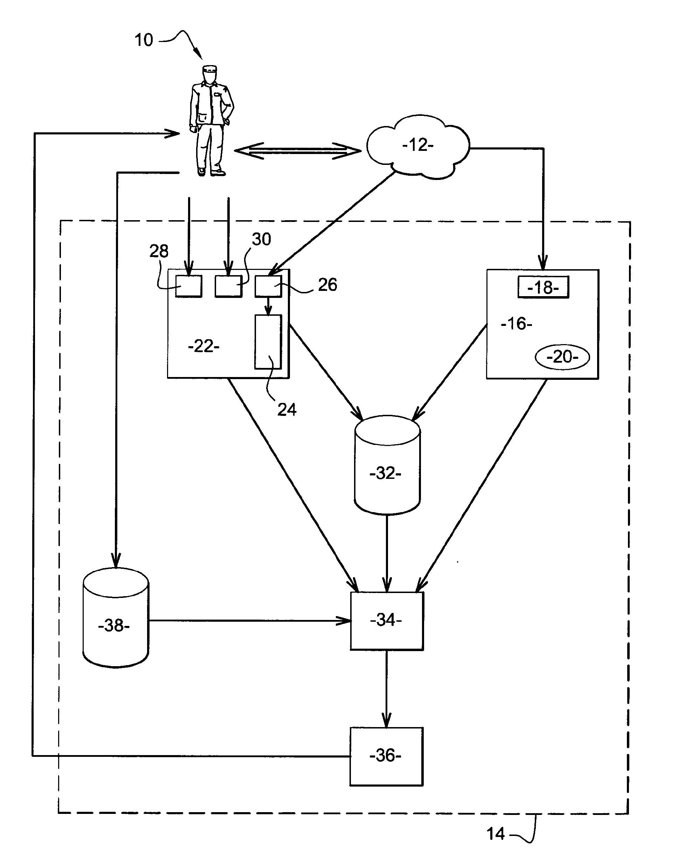

L'invention sera mieux comprise à la lecture de la description qui va suivre, donnée uniquement à titre d'exemple et faite en se référant au dessin annexé sur lequel la figure unique représente schématiquement un espace de travail muni d'un dispositif selon l'invention.

On a représenté sur la figure unique une personne désignée par la référence générale 10. Cette personne 10 interagit sur un espace de travail 12. Par la suite, on parlera d'utilisateur 10 de l'espace de travail 12.

L'espace de travail 12 peut être par exemple une salle de travail ou une interface d'un ordinateur personnel.

L'utilisateur 10 travaille à la réalisation d'une tâche, son espace de travail 12 étant dans une certaine configuration.

Pour améliorer les performances et l'efficacité de l'utilisateur 10 de l'espace de travail 12 à la réalisation de la tâche, on utilise un dispositif 14 pour déterminer un agencement optimal de l'espace de travail 12. Le but de ce dispositif 14 est d'aider l'utilisateur 10 à déterminer l'agencement de son espace de travail qui lui permettra d'exécuter la tâche le plus efficacement, et éventuellement d'aider l'utilisateur 10 à choisir la tâche pour laquelle il sera le plus efficace compte de tenu de l'espace de travail 14 dont il dispose.

Ce dispositif 14 comporte pour cela des moyens 16 de mesure de données d'environnement caractéristiques de l'état d'agencement instantané de l'espace de travail 12. Ces moyens de mesure 16 comprennent par exemple des capteurs physiques 18 tels que thermomètre, manomètre, luxmètre, hygromètre. Les moyens 16 de mesure de données d'environnement peuvent également comporter une horloge 20 indiquant la date et l'heure instantanée afin de pouvoir suivre l'évolution des données fournies par les capteurs au cours du temps.

Ces moyens 16 de mesure de données d'environnement permettent au dispositif 14 de connaître l'environnement et le contexte dans lequel travaille l'utilisateur.

Le dispositif 14 comporte également des moyens 22 de mesure d'une efficacité instantanée lors de la réalisation d'une tâche. Ces moyens 22 de mesure d'une efficacité instantanée permettent d'évaluer les performances instantanées de l'utilisateur 10.

Pour permettre l'évaluation de cette efficacité, les moyens 22 de mesure d'une efficacité instantanée comprennent des programmes 24 scrutant des actions de l'utilisateur 10 sur des dispositifs d'entrée/sortie d'ordinateur, ou des documents produits par l'utilisateur au fil de la réalisation de la tâche. Par exemple, le nombre de caractères frappés à la minute, le nombre de mots pour un document ou le débit lors d'une conversation permettent d'estimer l'efficacité d'un utilisateur 10.

Les programmes 24 utilisent des capteurs 26 surveillant des outils utilisés par l'utilisateur 10 lors de la réalisation de la tâche. Parmi ces outils, on trouve un poste téléphonique, un clavier d'ordinateur ou télécopieur. Tous ces outils font partie de l'espace de travail 12.

Les moyens 22 de mesure d'une efficacité instantanée contrôlent donc les actions de l'utilisateur 10, mais ils peuvent également contrôler le comportement physique de l'utilisateur. Ils comprennent pour cela des capteurs biométriques 28 connus aptes à capturer notamment le rythme cardiaque, la tension, la température corporelle, la direction du regard, le clignement des yeux, les mouvements de bras, la force de frappe sur un clavier d'ordinateur, de l'utilisateur 10.

Enfin, les moyens 22 de mesure d'une efficacité instantanée comportent également des moyens de saisie 30 permettant à l'utilisateur 10 d'indiquer manuellement une estimation son efficacité.

Les moyens 22 de mesure d'une efficacité instantanée calculent ensuite une fonction caractéristique de l'efficacité à partir des données fournies par les capteurs 26 et 28 et par l'utilisateur 10. Cette fonction est par exemple une combinaison linéaire des paramètres capturés par les capteurs 26 et 28.

Le dispositif 14 comporte donc à la fois des moyens 16 de mesure de données d'environnement et des moyens 22 de mesure d'une efficacité instantanée.

Pour améliorer son fonctionnement, le dispositif 14 est initialisé lors d'une phase d'apprentissage tenant compte de tous les agencements de l'espace de travail 14 apparus au cours du temps ainsi que des efficacités de l'utilisateur 10 associées à chaque agencement respectif.

Le dispositif 14 comporte pour cela des moyens 32 d'enregistrement des données d'environnement mesurées par les moyens 16 de mesure de données d'environnement, en relation avec l'efficacité instantanée mesurée par les moyens 22 de mesure d'une efficacité instantanée, pour une tâche en cours de réalisation.

Ces moyens d'enregistrement 32 comportent une base de données qui comprend par exemple une table mettant en relation les données d'environnement mesurées, l'efficacité instantanée mesurée correspondante ainsi que la tâche correspondante réalisée par l'utilisateur. Cette table joue donc un rôle d'historique.

L'analyse des données instantanées par rapport à l'historique est réalisée grâce à des moyens d'analyse 34, aptes à identifier, parmi les données d'environnement enregistrées en relation avec une tâche déterminée, celles qui correspondent à une efficacité instantanée optimale.

Le dispositif 14 peut donc proposer à l'utilisateur 10 exécutant une certaine tâche, de reproduire un agencement de son espace de travail 12 pour lequel il avait obtenu la meilleure efficacité lors de l'exécution de cette tâche.

Ces moyens d'analyse 34 et les moyens d'enregistrement 32 permettent donc de prédire, pour une tâche donnée une efficacité moyenne d'un utilisateur 10 donné. Cette prédiction peut être réalisée par exemple au moyen d'un réseau de neurones ou d'un filtre de Kalman.

Les moyens d'analyse 34 connaissent la tâche exécutée par l'utilisateur 10, soit car celui-ci l'a renseignée manuellement, soit grâce à des moyens de reconnaissance de tâche, à partir des données fournies par les moyens 22 de mesure d'efficacité, notamment à partir des programmes 24 scrutant les actions de l'utilisateur.

Le dispositif 14 comporte un dispositif d'alerte 36 apte à avertir l'utilisateur 10 lorsque l'efficacité devient inférieure à un seuil déterminé généralement calculé sur la base de l'efficacité moyenne.

Si l'efficacité instantanée est inférieure au seuil, le dispositif 14 peut proposer à l'utilisateur 10 d'effectuer une tâche pour laquelle il estime que l'efficacité de l'utilisateur sera meilleure. On peut pour cela munir le dispositif 14 de moyens 38 d'enregistrement d'une liste de tâches à accomplir. Les moyens 34 d'analyse sont alors aptes à déterminer, pour une configuration donnée de l'espace de travail 12, une tâche à exécuter dont l'efficacité prévisible compte tenu de cette configuration est optimale.

Le dispositif 14 peut également classer les tâches par ordre d'efficacité en fonction de l'agencement instantané de l'espace de travail et de l'état de l'utilisateur. En croisant ces informations avec des délais de travaux à réaliser par l'utilisateur 10, le dispositif 14 est capable de proposer la tâche correspondant le mieux à l'instant présent, en fonction des priorités de l'utilisateur 10.

Le dispositif 14 permet donc à un utilisateur 10 d'optimiser son emploi du temps en fonction de son efficacité instantanée et de ses priorités. Lors qu'une tâche est accomplie, le dispositif est capable de se reconfigurer pour proposer un nouvel emploi du temps à l'utilisateur.

On notera enfin que l'invention n'est pas limitée au mode de réalisation précédemment décrit.

## Revendications

1. Dispositif (14) pour déterminer un agencement optimal d'un espace de travail (12), comprenant :
- des moyens (16) de mesure de données d'environnement caractéristiques de l'état d'agencement instantané de l'espace de travail (12),
- des moyens (22) de mesure d'une efficacité instantanée lors de la réalisation d'une tâche,
- des moyens (32) d'enregistrement des données d'environnement mesurées en relation avec une efficacité instantanée mesurée, pour une tâche en cours de réalisation,
- des moyens d'analyse (34) aptes à identifier, parmi les données d'environnement enregistrées en relation avec une tâche déterminée, celles qui correspondent à une efficacité instantanée optimale.

2. Dispositif (14) selon la revendication 1, dans lequel les moyens (22) de mesure d'efficacité instantanée comprennent des programmes (24) scrutant des actions d'un utilisateur (10) sur des dispositifs d'entrée/sortie d'ordinateur, ou des documents produits par l'utilisateur au fil de la réalisation de la tâche.

3. Dispositif (14) selon la revendication 2, comprenant des moyens de reconnaissance de tâche, à partir des données fournies par les moyens de mesure d'efficacité.

4. Dispositif (14) selon l'une quelconque des revendications 1 à 3, dans lequel les moyens (22) de mesure d'efficacité instantanée comprennent des capteurs (26) surveillant des outils utilisés par l'utilisateur (10) lors de la réalisation de la tâche, tels que poste téléphonique, télécopieur.

5. Dispositif (14) selon l'une quelconque des revendications 1 à 4, dans lequel les moyens (22) de mesure d'efficacité comprennent des moyens de saisie (30) permettant à un utilisateur d'indiquer manuellement une estimation d'efficacité.

6. Dispositif (14) selon l'une quelconque des revendications 1 à 5, dans lequel les moyens (22) de mesure d'efficacité comprennent des capteurs biométriques (28) aptes à capturer notamment le rythme cardiaque, la tension, la température corporelle, la direction du regard, le clignement des yeux, les mouvements de bras, d'un utilisateur.

7. Dispositif (14) selon l'une quelconque des revendications 1 à 6, dans lequel les moyens (16) de mesure de données d'environnement comprennent une horloge (20) indiquant la date et l'heure instantanées.

8. Dispositif (14) selon l'une quelconque des revendications 1 à 7, dans lequel les moyens (16) de mesure de données d'environnement comprennent des capteurs physiques (18) tels que thermomètre, manomètre, luxmètre, hygromètre.

9. Dispositif (14) selon l'une quelconque des revendications 1 à 8, comprenant en outre des moyens (38) d'enregistrement d'une liste de tâches à accomplir.

10. Dispositif (14) selon la revendication 9, dans lequel les moyens d'analyse (34) sont aptes à déterminer, pour une configuration donnée de l'espace de travail (12), une tâche à exécuter dont l'efficacité prévisible compte tenu de cette configuration est optimale.

11. Dispositif (14) selon l'une quelconque des revendications 1 à 10, comprenant un dispositif d'alerte (36) apte à avertir lorsque l'efficacité instantanée mesurée devient inférieure à un seuil prédéterminé.

12. Dispositif pour agencer automatiquement un espace de travail, comprenant, outre un dispositif selon l'une quelconque des revendications 1 à 11 :
- un module d'agencement de l'espace de travail (12),
- des moyens d'actionnement du module d'agencement, commandés par les moyens d'analyse, pour configurer l'espace de travail dans des conditions propres à produire des données d'environnement identifiées comme correspondant à une efficacité optimale.

13. Procédé pour déterminer un agencement optimal d'un espace de travail (12), **caractérisé par le fait que** l'on exécute les étapes suivantes :
- on mesure des données d'environnement caractéristiques de l'état d'agencement instantané de l'espace de travail,
- on mesure une efficacité instantanée lors de la réalisation d'une tâche,
- on enregistre des données d'environnement mesurées en relation avec une efficacité instantanée mesurée, pour une tâche en cours de réalisation,
- on identifie, parmi les données d'environnement enregistrées en relation avec une tâche déterminée, celles qui correspondent à une efficacité instantanée optimale.

14. Procédé pour agencer automatiquement un espace de travail, dans lequel on détermine un agencement optimal de l'espace de travail par mise en oeuvre d'un procédé selon la revendication 13, et on configure l'espace de travail dans des conditions propres à produire des données d'environnement identifiées comme correspondant à une efficacité optimale.

15. Programme d'ordinateur pour l'exécution d'un procédé selon la revendication 13, comprenant :
- au moins une fonction logicielle pour la capture de données d'environnement caractéristiques de l'état d'agencement instantané de l'espace de travail,
- au moins une fonction logicielle pour la capture d'une efficacité instantanée lors de la réalisation d'une tâche,
- au moins une fonction logicielle pour l'enregistrement de données d'environnement mesurées en relation avec une efficacité instantanée mesurée, pour une tâche en cours de réalisation,
- au moins une fonction logicielle pour l'identification, parmi les données d'environnement enregistrées en relation avec une tâche déterminée, de celles qui correspondent à une efficacité instantanée optimale.

16. Support de données lisible par un ordinateur sur lequel est stocké un programme d'ordinateur selon la revendication 15.
